# EUROPÄISCHE PATENTSCHRIFT

(11) **EP 2 488 625 B1**
(45) Veröffentlichungstag und Bekanntmachung des Hinweises auf die Patenterteilung: **06.11.2013**
(21) Anmeldenummer: 10754311.8
(22) Anmeldetag: 09.09.2010
(51) Int. Cl.: C12F 3/02, F01K 17/02, H02J 11/00

(54) **ANLAGE UND VERFAHREN ZUR HERSTELLUNG, ABFÜLLUNG, VERPACKUNG UND/ODER TRANSPORT VON GETRÄNKEN**
INSTALLATION AND METHOD FOR MANUFACTURING, FILLING, PACKAGING AND/OR TRANSPORTING BEVERAGES
INSTALLATION ET PROCÉDÉ POUR LA PRODUCTION, L'EMBOUTEILLAGE, LE CONDITIONNEMENT ET/OU LE TRANSPORT DE BOISSONS

(30) Priorität: 15.10.2009 DE 102009044258
(43) Veröffentlichungstag der Anmeldung: 22.08.2012
(73) Patentinhaber: Krones AG, 93073 Neutraubling (DE)
(72) Erfinder: LINK, Albert, 84072 Au (DE); WASMUHT, Klaus, 91792 Ellingen (DE)
(74) Vertreter: Benninger, Johannes
(86) Internationale Anmeldenummer: PCT/EP2010/063211
(87) Internationale Veröffentlichungsnummer: WO 2011/045126

(56) Entgegenhaltungen:
- DE-A1-102006 021 453
- DE-A1-102007 006 519
- DE-A1-102007 043 875
- DE-U1-202008 014 330
- JP-A- 2002 171 674
- US-B1- 6 286 313

## Beschreibung

Die Erfindung betrifft eine Anlage sowie ein Verfahren zur Herstellung, Abfüllung, Verpackung und/oder Transport von Getränken mit den Merkmalen der unabhängigen Patentansprüche 1 bzw 5.

Wirtschaftliche Einheiten, Fertigungsanlagen und alle Arten von Handhabungseinrichtungen, -anlagen usw. benötigen unterschiedliche Arten von Energie, in erster Linie mechanische Antriebsenergie, bspw. auch in Form von hydraulischem und/oder pneumatischem Druck, Wärmeenergie und elektrische Energie. Die elektrische Energie wird üblicherweise über ein öffentliches Leitungsnetz geliefert und von einem Energieversorgungsunternehmen zur Verfügung gestellt, während es für die Wärmeversorgung zahlreiche unterschiedliche Möglichkeiten der Lieferung, Erzeugung und/oder Nutzung gibt. Die mechanische Energie wie auch die Energieträger für pneumatische und/oder hydraulische Antriebe und Druckversorgungen werden meist ebenfalls durch Wandlung aus elektrischer Energie gewonnen, typischerweise mittels Elektromotoren.

Bisher wird eine Maschine zur Getränkeherstellung i.d.R. über völlig unabhängige Energie-und Medienversorgungswege versorgt. Die benötigte Wärmeenergie wird durch eine Wärmeerzeugungsanlage zur Verfügung gestellt oder in der Maschine selbst erzeugt. Druckluft wird aus einer Lufterzeugungsanlage bezogen, während der elektrische Strom durch eine Stromverteilungsanlage bezogen wird. Bei der Energie- und Medienversorgung ist herkömmlicherweise davon auszugehen, dass die verschiedenen Energiearten weitestgehend verfügbar und von außen beziehbar sind. Eine irgendwie geartete Kopplung von Energieerzeugungsprozessen und Energieverbrauchern besteht dabei entweder nur in Ansätzen oder gar nicht.

Eine allerdings in anderen Bereichen, bspw. in privaten Haushalten oder auch in Wirtschafteinheiten mit ausgeprägtem Wärmeenergiebedarf, zunehmend eingesetzte Variante zur Wärmeversorgung kann in der Verwendung von Blockheizkraftwerken bestehen, die neben Wärme auch elektrische Energie liefern können. Diese elektrische Energie kann wahlweise selbst verbraucht oder in ein öffentliches Leitungsnetz eingespeist werden. Darüber hinaus können weitere Energieerzeuger zum Einsatz kommen, bspw. Fotovoltaikelemente zur Wandlung von solarer Strahlungsenergie in elektrischen Strom oder Solarkollektoren zur Wärmeerzeugung. Werden mehrere Energiequellen eingesetzt, ist es grundsätzlich möglich, deren Einsatz sinnvoll aufeinander abzustimmen, um einen möglichst effizienten und Kosten sparenden Einsatz zu ermöglichen.

Aus der DE 10 2005 036 703 A1 ist bspw. ein System zur Bereitstellung von Warmwasser und Heizenergie, zur Kühlung, Klimatisierung und gleichzeitiger mechanischer Leistungs- bzw. Stromerzeugung bekannt.

Aus der DE 296 05 939 U1 ist weiterhin ein System zur Prognose, Einsatzplanung und Komponentenoptimierung bei der Energieerzeugung bekannt, bei dem elektrischer und/oder thermischer Bezug oder Brennstoffbezug einerseits sowie Bereitstellung, Management oder Planung von elektrischer und thermischer Energie andererseits nach aktuellem Lastgang erfolgt.

Durch US 6,286,313 sind eine Anlage und ein Verfahren zur Herstellung, Abfüllung, Verpackung und/oder Transport von Getränken in Getränkebehältern bekannt. Die Anlagenteile sind dabei von mindestens einer gemeinsamen Energieerzeugungseinheit gespeist, die elektrische und/oder thermische Energie liefert. Dabei ist ein von einer mit fossilem Brennstoff betriebenen Verbrennungskraftmaschine angetriebener Generator für die primäre Elektrizitätsversorgung der Anlage und der Anlageteile vorgesehen. Bei entsprechender Dimensionierung erlaubt der von der mit fossilem Brennstoff betriebenen Verbrennungskraftmaschine angetriebene Generator die Elektrizitätsversorgung der Anlage, ohne Strom aus dem öffentlichen Elektrizitätsnetz zu beziehen. Ein durch Verbrennung fossilen Brennstoffs beheiztes Wasserkochmodul dient der Zurverfügungstellung heißen Wassers und/oder Dampfs für die Anlage. Das Wasserkochermodul kann auch Dampf für eine Dampfturbine bereitstellen, die bei Bedarf einen elektrischen Generator antreibt, um zusätzliche elektrische Energie zur Verfügung zu stellen.

Durch DE 10 2007 043 875 A1 ist ein Motor mit integralem programmierbarem Logikcontroller bekannt.

Durch DE 10 2007 006 519 A1 ist ein Verfahren zur Reduzierung des Energiebedarfs bei Pasteurisierungsanlagen bekannt, bei dem Behälter vor dem Füllen in einer Rinsermaschine mit Wasser behandelt und während des Pasteurisierens erhitzt und anschließend abgekühlt werden. Der Energieverbrauch soll dadurch reduziert werden, dass das Abwasser der Reinigungs- oder Spülmaschine unter Nutzung der im Wasser enthaltenen Wärmeenergie der Pasteurisierungsanlage zur Verfügung gestellt wird.

Durch DE 20 2008 014 330 U1 ist eine Vorrichtung zur Energieversorgung einer Brauerei bekannt. Das Verfahren sieht vor, anfallende Brauereireststoffe in Biogas zu wandeln und dieses zur Umsetzung in thermische und elektrische Energie einzusetzen. Die Brauerei soll durch den Einsatz eines Blockheizkraftwerks kohlendioxidneutral arbeiten können.

Durch JP 2002 171674 A ist ein Sonnenenergiegenerator mit einem Energiespeichersystem bekannt.

Durch DE 10 2006 021 453 A1 ist eine Energiegewinnung mittels einer Wasserentsalzungsanlage bekannt.

Als ein vorrangiges Ziel der vorliegenden Erfindung kann definiert werden, dass eine Anlage zur Herstellung, Abfüllung, Verpackung und/oder Transport von Getränken als ein System miteinander gekoppelter Verbraucher betrachtet werden soll, deren Energiebedarf auf möglichst effiziente Weise gedeckt werden soll, ggf. unter Einsatz einer Energieerzeugungseinheit. Weiterhin soll ein möglichst energieeffizientes Verfahren zur Herstellung, Abfüllung, Verpackung und/oder Transport von Getränken vorgeschlagen werden.

Diese Ziele der Erfindung werden mit den Gegenständen der unabhängigen Ansprüche erreicht. Merkmale vorteilhafter Weiterbildungen der Erfindung ergeben sich aus den abhängigen Ansprüchen. Zur Erreichung des erstgenannten Ziels schlägt die vorliegende Erfindung eine Anlage zur Herstellung, Abfüllung, Verpackung und/oder zum Transport von Getränken in Getränkebehältern vor, bei der die Anlagenteile physisch und über eine gemeinsame Steuerung und zumindest teilweise energetisch miteinander gekoppelt sind. Zudem bilden die Anlagenteile jeweils miteinander gekoppelte Energiewandlungs-, -speicher- und/oder -verbrauchseinheiten, die von mindestens einer gemeinsamen Energieerzeugungseinheit gespeist sind, die mechanische Wellenenergie und/oder elektrische und/oder thermische Energie liefert. Diese Energieerzeugungseinheit umfasst insbesondere wenigstens eine Gasturbine, die mechanisch mit einem elektrischen Generator und/oder mit einem Kompressor einer Druckluftanlage gekoppelt ist. Weiterhin kann die Gasturbine wenigstens einen Wärmetauscher aufweisen, der mit wenigstens einem der Anlagenteile gekoppelt ist. Als Wärmetauscher kommt insbesondere ein Abgaswärmetauscher in Frage, der die in den heißen Abgasen enthaltene Wärmeenergie nutzen und anderen Wärmeverbrauchern, bspw. einem Schrumpftunnel oder einer Folienerwärmungseinrichtung o. dgl. zur Verfügung stellen kann. Darüber hinaus oder alternativ kann jedoch ein Wärmetauscher vorgesehen sein, die die in einem Kühlfluid der Gasturbine enthaltene Wärmeenergie nutzen und anderen Verbrauchern zur Verfügung stellen kann.

Bei einer Koppelung der erwähnten Einheiten der erfindungsgemäßen Anlage kann es insbesondere vorteilhaft sein, wenn die Energieerzeugungseinheit bzw. die Gasturbine zumindest einen Trockenteilblock der Behälterbehandlungsanlage und/oder der Getränkeabfüllanlage oder einen Teil davon energetisch versorgt. So kann ein Teil der Abwärme oder die gesamte Abwärme, die aus den Wärmetauschereinheiten der Gasturbine gewonnen werden, energetisch für unterschiedliche Zwecke genutzt werden. Vorteilhaft kann es bspw. sein, die Energieerzeugungseinheit bzw. die Gasturbine zumindest mit einer Heizstation der Behälterbehandlungsanlage energetisch zu koppeln. Die Abwärme kann bspw. sinnvoll für eine Beheizungsstation für Vorformlinge und/oder für eine Blasformstation genutzt werden. Besonders vorteilhaft kann ein Schrumpftunnel einer Verpackungsstation mit Wärme versorgt werden, da hier der Energiebedarf besonders hoch ist. Weiterhin kann die Energieerzeugungseinheit bzw. die Gasturbine zumindest mit einer Druckluftversorgung wenigstens einer Verpackungsstation energetisch gekoppelt sein. Hierbei handelt es sich typischerweise um eine mechanische Koppelung, bei der die Wellenleistung der Gasturbine zum direkten oder indirekten Antrieb von Druckluftkompressoren genutzt wird. Ein indirekter Antrieb kann bspw. über eine Wandlung der Antriebsleistung in elektrische Energie mittels eines Generators und einem Kompressorantrieb mit einem Elektromotor erfolgen.

Eine weitere Ausführungsvariante der Anlage kann vorsehen, dass die Energieerzeugungseinheiten sowie die Energiewandlungs-, Energiespeicher- und/oder Energieverbrauchseinheiten mit einem regionalen, überregionalen und/oder öffentlichen Leitungsnetz zur elektrischen Energieversorgung und/oder zur Wärmeenergieversorgung gekoppelt sind. Normalerweise jedoch werden die verschiedenen Energiearten, die von der Energieerzeugungseinheit bzw. der Gasturbine erzeugt und zur Verfügung gestellt werden, im Nahverbund genutzt, d.h. bspw. innerhalb der Anlage, die durch die verschiedenen gekoppelten Einheiten der Getränkebehandlungsstationen gebildet ist.

Neben der zuvor beschriebenen erfindungsgemäßen Anlage schlägt die vorliegende Erfindung auch ein Verfahren zur Herstellung, Abfüllung, Verpackung und/oder zum Transport von Getränken in Getränkebehältern vor, bei dem die Anlagenteile physisch und über eine gemeinsame Steuerung und zumindest teilweise energetisch miteinander gekoppelt sind. Die Anlagenteile bilden jeweils miteinander gekoppelte Energiewandlungs-, -speicher- und/oder -verbrauchseinheiten, die von mindestens einer gemeinsamen Energieerzeugungseinheit gespeist werden, die mechanische Wellenenergie und/oder elektrische und/oder thermische Energie liefert. Das Verfahren sieht weiterhin vor, dass die Energieerzeugungseinheit nicht extern angeordnet ist, sondern nahe an den übrigen Anlagenteilen, was bspw. bedeuten kann, dass die Energieerzeugungseinheit innerhalb derselben Fertigungsanlage oder auch innerhalb einer größeren Fertigungsstätte stehen kann, während die räumlich mehr oder weniger nah benachbarten Verbrauchseinheiten wie bspw. der Schrumpftunnel oder andere Behälterbehandlungsstationen zumindest in einer erreichbaren Umgebung angeordnet werden, um die von der Energieerzeugungseinheit zur Verfügung gestellten Energieformen - mechanisch, elektrisch, thermisch etc. - nutzbar zu machen, ohne dass längere Transportwege zu überwinden wären. Eine sinnvolle Anordnung kann jedoch darin bestehen, dass die Energieerzeugungseinheit in einem separaten Gebäudeteil, in einem abgetrennten Raum, in einem Gebäudeanbau o. dgl. untergebracht ist und von dort aus die verfügbare Energie zu den unterschiedlichen Fertigungsstätten und Anlagenteilen liefert. D.h., von ihrer räumlichen Aufstellung kann es sich wahlweise um eine integrierte Einheit oder um eine externe Einheit handeln.

Ein besonders geeigneter Antrieb für die Energieerzeugungseinheit kann bspw. eine Gasturbine sein, die einen elektrischen Generator und/oder einen Kompressor einer Druckluftanlage antreibt, wodurch jeweils mechanische Antriebsformen geliefert werden. Die von der Gasturbine gelieferte Abwärme kann wenigstens einem weiteren Anlagenteil zur Verfügung gestellt werden wie bspw. einem Schrumpftunnel o. dgl. Die elektrische Energie kann auf vielfältige Weise genutzt werden, bspw. für die elektrischen Antriebe einer Flaschenabfüllanlage. Die Druckluft kann bspw. bei einer Streckblasformstation genutzt werden.

Eine weitere sinnvolle Variante des Verfahrens kann darin bestehen, die Energieerzeugungseinheiten sowie die Energiewandlungs-, Energiespeicher- und/oder Energieverbrauchseinheiten mit einem (regionalen und/oder öffentlichen) Leitungsnetz zur elektrischen Energieversorgung und/oder zur Wärmeenergieversorgung zu koppeln. Wahlweise kann eine zu bestimmten Zeitpunkten benötigte und nicht von der Energieerzeugungseinheit zur Verfügung stellbare Mehrkapazität von einer mit den Anlagenteilen gekoppelten Speichereinheit geliefert werden, die eine Pufferkapazität zur Verfügung stellt. Dies kann bspw. ein Druckspeicher, ein elektrischer Speicher oder auch ein thermischer Speicher zur Speicherung der von der Gasturbine oder anderen Erzeugereinheiten gelieferten Abwärme sein. Darüber hinaus oder alternativ kann eine zu bestimmten Zeitpunkten benötigte und nicht von der Energieerzeugungseinheit zur Verfügung stellbare Mehrkapazität von einem mit den Anlagenteilen gekoppelten regionalen und/oder öffentlichen Leitungsnetz zur elektrischen Energieversorgung und/oder zur Wärmeenergieversorgung geliefert werden. In diesem Zusammenhang kann es weiterhin von Vorteil sein, eine zu bestimmten Zeitpunkten von der Energieerzeugungseinheit gelieferte und verfügbare und gleichzeitig nicht von den Verbrauchseinheiten benötigte und/oder nicht von der wenigstens einen Speichereinheit aufnehmbare elektrische Energie dem öffentlichen Leitungsnetz und/oder benachbarten Verbrauchseinheiten zur Verfügung stellen zu können. Selbstverständlich kann auch eine Variante darin bestehen, eine zu bestimmten Zeitpunkten von der Energieerzeugungseinheit gelieferte und verfügbare und gleichzeitig nicht von den Verbrauchseinheiten benötigte und/oder nicht von der wenigstens einen Speichereinheit aufnehmbare Wärmeenergie benachbarten Verbrauchseinheiten zur Verfügung zu stellen.

Die durch die erfindungsgemäße Anlage gebildete Kraft-Wärme-gekoppelte Anlage - ggf. auch als Blockheizkraftwerk zu bezeichnen - kann bspw. wärmegeführt betrieben werden, womit gemeint ist, dass die jeweils während eines bestimmten Zeitraums benötigte und angeforderte Wärmemenge den Betriebsmodus der Anlage definieren kann. So kann es bspw. sinnvoll sein, die Gasturbine nur dann laufen zu lassen, wenn sichergestellt ist, dass die gesamte erzeugte Wärmeenergie auch benötigt wird, während zu Zeiten, in denen zuviel Abwärme produziert würde, ein Fremdbezug der parallel benötigten Wellenenergie und/oder elektrischen Energie zu bevorzugen ist, da dies u.U. kostengünstiger ausfallen kann.

Eine weitere sinnvolle Variante des erfindungsgemäßen Verfahrens zur Steuerung der erfindungsgemäßen Anordnung kann darin bestehen, dass alle miteinander gekoppelten System mit einer zentralen Steuerungszentrale kommunizieren und bei einer erhöhten öffentlichen Nachfrage nach elektrischer Energie so konfiguriert werden, dass je nach Strombedarf einzelne, mehrere oder alle der miteinander gekoppelten Systeme zur Lieferung elektrischer Energie an das öffentliche Netz herangezogen werden.

Mit der vorliegenden Erfindung wird sowohl der mögliche Einsatz als auch die Einbindung einer Kraft-Wärmekopplung in den Prozess der Getränkeherstellung, Abfüllung und Verpackung und den Transport von Getränkepaletten sowie damit verbundener und/oder koppelbarer Prozesse beschrieben. Es wird damit ein Verfahren zur Einbindung alternativer Energieerzeugungsanlagen in den Prozess der Getränkeherstellung, der Getränkeabfüllung und Getränkeverpackungstechnik, sowie des Transportes von Getränkepaletten beschrieben werden. Da die Anlagenteile und Maschinen in der Getränkeindustrie in aller Regel Wärme, elektrischen Strom und Druckluft zur Produktion benötigen, wird mittels der erfindungsgemäßen Kraft-Wärmekopplung, insbesondere unter Einbeziehung einer Mikrogasturbine, durch Verbrennung von Gas oder Biogas elektrischer Strom erzeugt. Die durch die Verbrennung des Gases entstehende Abwärme kann bspw. zur Heizung von Gebäuden verwendet werden. Darüber hinaus können auch andere Anlagenteile mit der thermischen Energie versorgt werden. Durch die intelligente Kopplung einer Getränkeherstellungsmaschine mit einer Mikrogasturbine, kann die abgegebene Wärme der Maschine für Schrumpfprozesse, Materialerwärmungsprozesse, Aufheizvorgänge von Medien direkt oder indirekt zugeführt werden. Der entstehende Strom kann zum Betreiben von Antrieben, Lüftern, Motoren usw. genutzt werden. Überschüssiger Strom kann ins Netz (öffentlich oder betriebsintern) zurückgespeist werden und/oder anderweitig genutzt werden. Über eine mechanische Erweiterung der Mikrogasturbine kann eine Drucklufterzeugungsanlage eingekoppelt werden, die den Getränkemaschinen die notwendige Druckluft zur Verfügung stellt. Als Brennmaterial für die Mikrogasturbine können bspw. organische Abfälle aus dem Getränkeherstellungsprozess zugeführt werden. Gegenüber den bekannten Anlagen, bei denen die verschiedenen Maschinenteile zur Getränkeherstellung in der Regel über völlig unabhängige Energie- und Medienversorgungswege versorgt werden, ergeben sich wesentliche Vorteile. Während herkömmlicherweise die benötigte Wärme durch eine separate Wärmeerzeugungsanlage zur Verfügung gestellt oder in der Maschine selbst erzeugt wird, liefert die Kraft-Wärmekoppelung die Abwärme quasi als Abfallprodukt. Die benötigte Luft wird erfindungsgemäß nicht mehr durch eine Lufterzeugungsanlage geliefert, sondern aus der mechanischen Wellenenergie der Verbrennungskraftmaschine gewonnen. Auch der elektrische Strom wird nicht durch eine herkömmliche Stromverteilungsanlage bezogen, sondern aus der Kraft-Wärmekoppelung erzeugt. Bei der herkömmlichen Energie- und Medienversorgung wird dabei ausgegangen, dass diese zu 100% verfügbar sind. Eine intelligente Kopplung von Energieerzeugungsprozessen und Energieverbrauchern besteht bei bisher bekannten Anlagen nicht.

Diesen Nachteilen hilft die Erfindung dadurch ab, dass bspw. eine Mikrogasturbine sowohl einen Generator zur Erzeugung von elektrischem Strom als auch direkt oder indirekt gekoppelt einen Kompressor zur Erzeugung von Druckluft antreibt. Dabei kann sowohl der Generator als auch der Kompressor unabhängig ein- bzw. ausgeschaltet werden. Das bei der Verbrennung durch die Mikrogasturbine entstandenen Abgas soll über einen Abgaswärmetauscher durch ein geeignetes Tauschmedium abgekühlt werden. Das Tauschmedium (Dampf, Heizwasser, Luft, ...) soll dabei als Heizquelle für eine Getränkemaschine (Schrumpftunnel, Blasofen, CIP-Anlage, ...) genutzt werden. Als Brennstoff können sowohl zugekauftes Gas als auch eigen gewonnenes Biogas aus organischen Abfällen des Getränkebetriebes genutzt werden. Ein intelligentes Steuerungssystem koordlnlert und optimiert die Regelprozesse von Mikrogasturbine, Abgastauschsystem und Getränkemaschine.

Ergänzend kann erwähnt werden, dass die Koppelung der Energieerzeuger-d.h. der sog. Mikrogasturbine - und der Verbraucher der erfindungsgemäßen Anlage auch nur im Zusammenhang mit einem sog. Trockenteilblock stattfinden kann. Diese leicht einschränkende Variante ist jedoch keinesfalls zwingend, da es durchaus vorteilhaft sein kann, Verbrauchseinheiten, die dem sog. Nassteil einer Abfüllanlage zuzurechnen sind, mittels der Gasturbine oder einer anderen Energieerzeugungseinheit energetisch, thermisch, elektrisch oder auf andere Weise zu versorgen.

Die von verschiedenen Anlagenteilen benötigte Wärmeenergie und elektrische und/oder pneumatische Energie kann mit Hilfe der Erfindung auf vorteilhafte Weise von der Energieerzeugungseinheit zur Verfügung gestellt werden, wodurch nicht nur die Gesamtenergiekosten der gesamten Anlage deutlich reduziert werden können. Auch ist damit eine deutliche Reduktion der Emission von klimaschädlichem Kohlendioxid verbunden, wodurch die erfindungsgemäße Konfiguration einen wertvollen Beitrag zur Schonung der Energieressourcen sowie zum Schutz der Umwelt vor klimarelevanten Emissionen liefern kann.

Die Erfindung wird nachfolgend anhand eines bevorzugten Ausführungsbeispiels unter Bezugnahme auf die beiliegenden Zeichnungen näher erläutert. Die Ausführungsbeispiele dienen zur Veranschaulichung der Erfindung, sind jedoch in keiner Weise einschränkend zu verstehen.
Fig. 1 zeigt ein schematisches Blockschaltbild einer erfindungsgemäßen Anlage.
Fig. 2 zeigt eine beispielhafte Maschinenkonfiguration einer sog. PET-Einweg-Linie, bei der aus PET-Vorformlingen PET-Behälter geformt werden, die anschließend mit Getränken befüllt werden.
Fig. 3 zeigt eine beispielhafte Maschinenkonfiguration einer sog. Glas-Linie, bei der Glasbehälter mit Getränken befüllt werden.

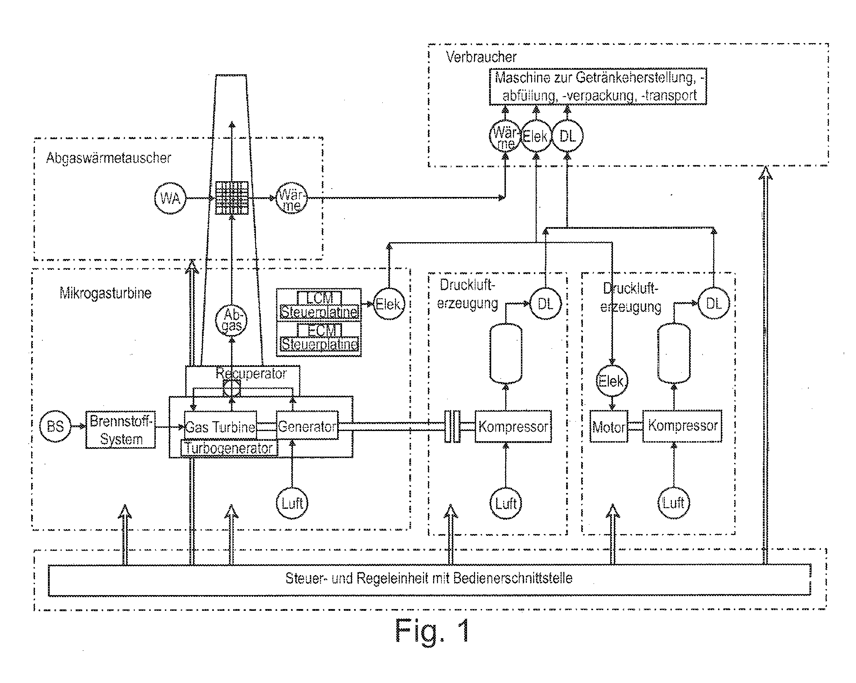

Die schematische Darstellung der Fig. 1 zeigt ein Blockdiagramm einer Ausführungsvariante eines erfindungsgemäßen Systems bzw. einer erfindungsgemäßen Anlage. Hierbei wird anhand einer möglichen Konfiguration der Einsatz und die Einbindung einer Kraft-Wärmekopplungseinheit in den Prozess der Getränkeherstellung, Abfüllung und Verpackung und den Transport von Getränkepaletten sowie damit verbundener und/oder koppelbarer Prozesse beschrieben. Es wird damit ein Verfahren zur Einbindung alternativer Energieerzeugungsanlagen in den Prozess der Getränkeherstellung, der Getränkeabfüllung und Getränkeverpackungstechnik, sowie des Transportes von Getränkepaletten beschrieben. Da die Anlagenteile und Maschinen in der Getränkeindustrie in aller Regel Wärme, elektrischen Strom und Druckluft zur Produktion benötigen, wird mittels der erfindungsgemäßen Kraft-Wärmekopplung, insbesondere unter Einbeziehung einer Mikrogasturbine, durch Verbrennung von Gas oder Biogas elektrischer Strom erzeugt. Der links unten in der Figur dargestellte Block bezeichnet die Mikrogasturbine, bei der mittels mechanischer Koppelung aus der Wellenenergie einer mittels Brenngas befeuerten Turbine ein elektrischer Generator angetrieben wird, der über eine geeignete Regelung und/oder Steuerung - hier bezeichnet als ECM (Steuerplatine) und LCM (Steuerplatine) - elektrischen Strom an weitere Anlagenteile liefert, die als elektrische Verbraucher fungieren. Diese Verbraucher sind in dem rechts oben dargestellten Block zusammengefasst und können alle Maschinen und Anlagenteile umfassen, die der Getränkeherstellung und Getränkeabfüllung, dem Transport der Behälter sowie der Verpackung etc. dienen.

Der Generator kann weiterhin einen Kompressor zur Drucklufterzeugung (rechter Block unten) antreiben, der somit über einen Elektromotor angetrieben wird. Wahlweise kann die Gasturbine mittels mechanischer Koppelung einen Druckluftkompressor antreiben, was mit dem mittleren Block angedeutet ist. Die Drucklufterzeugung umfasst jeweils einen Druckspeicherbehälter, über den die Anbindung an die Verbraucher erfolgt, die somit ebenfalls von der Anlage mit pneumatischer Energie - gekennzeichnet durch "DL" - versorgt werden. Die beiden dargestellten Varianten zur Drucklufterzeugung - elektrisch oder mechanisch betriebener Kompressor - sind wahlweise ergänzend oder alternativ zu verstehen.

Die dritte Energiekomponente, die von der Gasturbine geliefert werden kann, ist die Abwärme, die insbesondere über einen Abgaswärmetauscher dem Abgas entzogen und als Wärme an die Verbraucher geliefert werden kann. Die durch die Verbrennung des Gases entstehende Abwärme kann bspw. auch zur Heizung von Gebäuden verwendet werden. Darüber hinaus können alle anderen Anlagenteile mit der thermischen Energie versorgt werden. Durch die intelligente Kopplung einer Getränkeherstellungsmaschine mit einer Mikrogasturbine kann die abgegebene Wärme der Maschine für Schrumpfprozesse, Materialerwärmungsprozesse, Aufheizvorgänge von Medien direkt oder indirekt zugeführt werden. Der entstehende Strom kann zum Betreiben von Antrieben, Lüftern, Motoren usw. genutzt werden. Überschüssiger Strom kann ins Netz (öffentlich oder betriebsintern) zurückgespeist werden und/oder anderweitig genutzt werden. Über eine mechanische Erweiterung der Mikrogasturbine kann eine Drucklufterzeugungsanlage eingekoppelt werden, die den Getränkemaschinen die notwendige Druckluft zur Verfügung stellt.

Als Brennmaterial für die Mikrogasturbine kann prinzipiell jeder denkbare Brennstoff in Frage kommen, bspw. Erdgas, Biogas o. dgl. Als Brennstoffe können bspw. auch organische Abfälle aus dem Getränkeherstellungsprozess zugeführt werden, ggf. unter Zwischenschaltung einer Biogaserzeugungsanlage. Gegenüber den bekannten Anlagen, bei denen die verschiedenen Maschinenteile zur Getränkeherstellung in der Regel über völlig unabhängige Energie- und Medienversorgungswege versorgt werden, ergeben sich wesentliche Vorteile. Während herkömmlicherweise die benötigte Wärme durch eine separate Wärmeerzeugungsanlage zur Verfügung gestellt oder in der Maschine selbst erzeugt wird, liefert die Kraft-Wärmekoppelung die Abwärme quasi als Abfallprodukt. Die benötigte Luft wird erfindungsgemäß nicht mehr durch eine Lufterzeugungsanlage geliefert, sondern aus der mechanischen Wellenenergie der Verbrennungskraftmaschine gewonnen. Auch der elektrische Strom wird nicht durch eine herkömmliche Stromverteilungsanlage bezogen, sondern aus der Kraft-Wärmekoppelung erzeugt. Bei der herkömmlichen Energie- und Medienversorgung wird dabei ausgegangen, dass diese zu 100% verfügbar sind. Eine intelligente Kopplung von Energieerzeugungsprozessen und Energieverbrauchern besteht bei bisher bekannten Anlagen nicht.

Diesen Nachteilen hilft die Erfindung dadurch ab, dass bspw. eine Mikrogasturbine sowohl einen Generator zur Erzeugung von elektrischem Strom als auch direkt oder indirekt gekoppelt einen Kompressor zur Erzeugung von Druckluft antreibt. Dabei kann sowohl der Generator als auch der Kompressor unabhängig ein- bzw. ausgeschaltet werden. Das bei der Verbrennung durch die Mikrogasturbine entstandenen Abgas soll über einen Abgaswärmetauscher durch ein geeignetes Tauschmedium abgekühlt werden. Das Tauschmedium (Dampf, Heizwasser, Luft, ...) soll dabei als Heizquelle für eine Getränkemaschine (Schrumpftunnel, Blasofen, CIP-Anlage, ...) genutzt werden. Als Brennstoff können sowohl zugekauftes Gas als auch eigen gewonnenes Biogas aus organischen Abfällen des Getränkebetriebes genutzt werden. Ein intelligentes Steuerungssystem koordiniert und optimiert die Regelprozesse von Mikrogasturbine, Abgastauschsystem und Getränkemaschine.

Wie mit dem schmalen Block unterhalb der drei nebeneinander angeordneten Blöcke "Mikrogasturbine" und "Drucklufterzeugung" angedeutet ist, sind alle miteinander gekoppelten Einheiten über eine geeignete Steuer- und Regeleinheit mit einer Bedienschnittstelle sowie mit geeigneten Anzeigeeinheiten verbunden und so verschaltet, dass eine möglichst energieeffiziente und gleichzeitig bedarfsgerechte Verteilung und Nutzung der verschiedenen Energiearten auf die verschiedenen Verbraucher erfolgen kann.

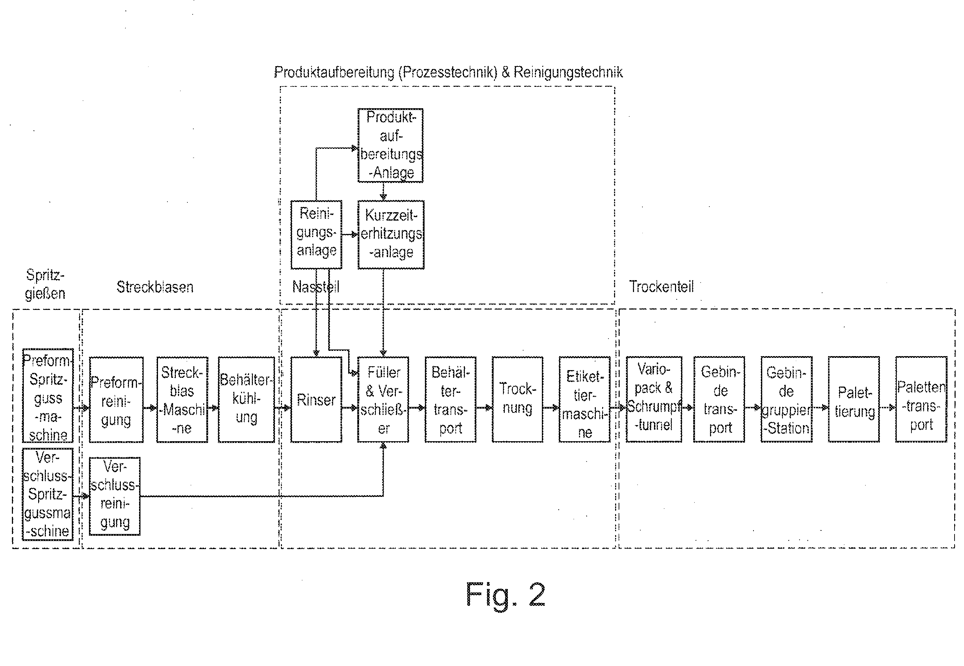

Das schematische Blockschaltbild der Fig. 2 illustiert eine beispielhafte Maschinenkonfiguration einer sog. PET-Einweg-Linie, bei der aus PET-Vorformlingen PET-Behälter geformt werden, die anschließend mit Getränken befüllt werden. Bei der ganz links gezeigten ersten Station, dem Spritzgießen, werden mit einer sog. Preform-Spritzgussmaschine und einer Verschluss-Spritzmaschine aus thermoplastischem Kunststoff, insbesondere aus PET, die sog. Vorformlinge und bereits fertig geformte Verschlussdeckel hergestellt. Die für den Spritzgussvorgang benötigte Wärmeenergie zum Aufschmelzen des zu verarbeitenden Kunststoffes bzw. Kunststoffgranulats kann insbesondere aus der Abwärme der Gasturbine gewonnen werden. Ggf. kann auch der für das Spritzgießen aufzubringende hydraulische Pressendruck aus der Wellenenergie der Gasturbine gewonnen werden, typischerweise durch direkte Koppelung eines hydraulischen Druckerzeugers oder einer Hydraulikpumpe mit der rotierenden Welle der Gasturbine, ggf. unter Zwischenschaltung einer mechanischelektrischen Wandlung, so dass der hydraulische Antrieb entweder direkt von der Gasturbine oder durch einen Elektromotor betrieben werden kann.

In der nachfolgenden Anlagenstation, dem sog. Streckblasen, werden die Vorformlinge zunächst gereinigt und anschließend einer Streckblasmaschine zugeführt, wobei die Vorformlinge zu erwärmen sind, damit sie sich in gewünschter Weise durch die Blasformen und den dabei aufgebrachten Innendruck verformen lassen. Die zum Erwärmen der Vorformlinge benötigte Wärme kann wahlweise aus der Abwärme der Gasturbine gewonnen werden oder durch elektrische Heizeinrichtungen wie bspw. Infrarotstrahler aufgebracht werden, die insbesondere mit der von der Energieerzeugungseinheit gelieferten elektrischen Energie gespeist werden können. Die streckgeblasenen Behälter werden anschließend gekühlt, was je nach Anlagenkonfiguration wiederum über geeignete Wärmetauscher erfolgen kann, die ebenfalls energetisch mit der Energieerzeugungseinheit und/oder mit anderen Anlagenteilen gekoppelt sein können.

Die fertig geformten Behälter inklusive der gereinigten Verschlüsse (vgl. Verschlussreinigungs-Station) werden anschließend an einen sog. Nassteil übergeben, in dem die eigentliche Getränkeabfüllung erfolgt. Die Reinigung der Behälter vor der Abfüllung der Flüssigkeit kann bspw. über einen sog. Rinser erfolgen, wonach die Flaschen mit einem Füller befüllt und mit einem Verschließer verschlossen werden. Mit dem Nassteil sind die Stationen der Produktaufbereitung, d.h. der Prozesstechnik, und der Reinigungstechnik gekoppelt, was durch die Anordnung dieses Blocks oberhalb des Nassteilblocks angedeutet ist. Das abzufüllende Produkt, bspw. das abzufüllende Getränk, wird von der Produktaufbereitungsanlage über eine optionale Kurzzeiterhitzungsanlage zum Füller geliefert. Bei einer sog. Kaltabfüllung entfällt das kurzzeitige Erhitzen, während eine herkömmliche Abfüllung generell das Erhitzen der Getränke vor dem Abfüllen zur Sicherstellung der Haltbarkeit und Keimfreiheit bzw. Keimarmut vorsieht. Auch diese Kurzzeiterhitzungsanlage kann auf vorteilhafte Weise die Abwärme der Energieerzeugungseinheit nutzen, bspw. über die Abgaswärmetauscher der Gasturbine o.ä. Beide erwähnten Anlagenteile der Produktaufbereitung sowie der Rinser und der Füller stehen zusätzlich mit einer Reinigungsanlage in Verbindung.

Nach dem Befüllen der Behälter und deren Verschließen werden sie über einen geeigneten Behältertransport einer Trocknung zugeführt, die bspw. ein Heißluftgebläse umfassen kann. Auch hierfür kann wiederum die Abwärme der Gasturbine genutzt werden. Normalerweise erfolgt nach der Trocknung die Etikettierung der Behälter, wozu entsprechend Fig. 2 eine Etikettiermaschine dient, die nach herkömmlichem Sprachgebrauch noch dem Nassteil der Anlage zuzurechnen ist. Es sind auch andere Arten der Behälteretikettierung möglich, bspw. ein Bedrucken eines Etiketts oder ein direktes Bedrucken der Behälter, was typischerweise in trockenem Zustand der Behälter erfolgt. Die elektrische und/oder pneumatische Energie, welche die Etikettiermaschine benötigt, kann vorzugsweise aus der von der Energieerzeugungseinheit mittels des elektrischen Generators gewonnenen elektrischen Energie zur Verfügung gestellt werden, ebenso wie damit ggf. weitere Anlagenteile gespeist werden können, bspw. die Transporteinrichtungen, die Füller, Verschließer etc.

Der dem Nassteil nachgeordnete Trockenteil der Anlage umfasst wiederum eine Verpackungsstation, die bspw. durch eine sog. Variopack-Anlage mit Folieneinschlagmodul zum Umhüllen der zuvor gebildeten Gebinde aus mehreren Getränkebehältern mit Schrumpffolie und dem anschließenden Erwärmen dieser Folie in einem Schrumpftunnel sowie nachgeordnete Transporteinrichtungen gebildet sein kann. Der Schrumpftunnel stellte eine besonders energieintensinve Station der Anlage dar, so dass der Betrieb mit der Abwärme aus der Gasturbine besonders wünschenswert ist. In der Nutzung der von den Abgaswärmetauschern gewonnenen Energie liegt ein großes Einsparpotenzial, da der Betrieb solcher Schrumpftunnel normalerweise relativ hohe Energiekosten verursacht. Der anschließende Gebindetransport fördert die Gebinde zu einer Gruppierstation und einer nachgeordneten Palettierstation, wonach der Palettentransport für die Einlagerung der Paletten in einem Lager oder deren Übergabe an Transporteinrichtungen wie Liefer-Lkw o. dgl. sorgen kann. Bei diesen erwähnten Stationen besteht weiteres Potenzial zur Nutzung der von der Anlage gelieferten elektrischen oder pneumatischen Energie.

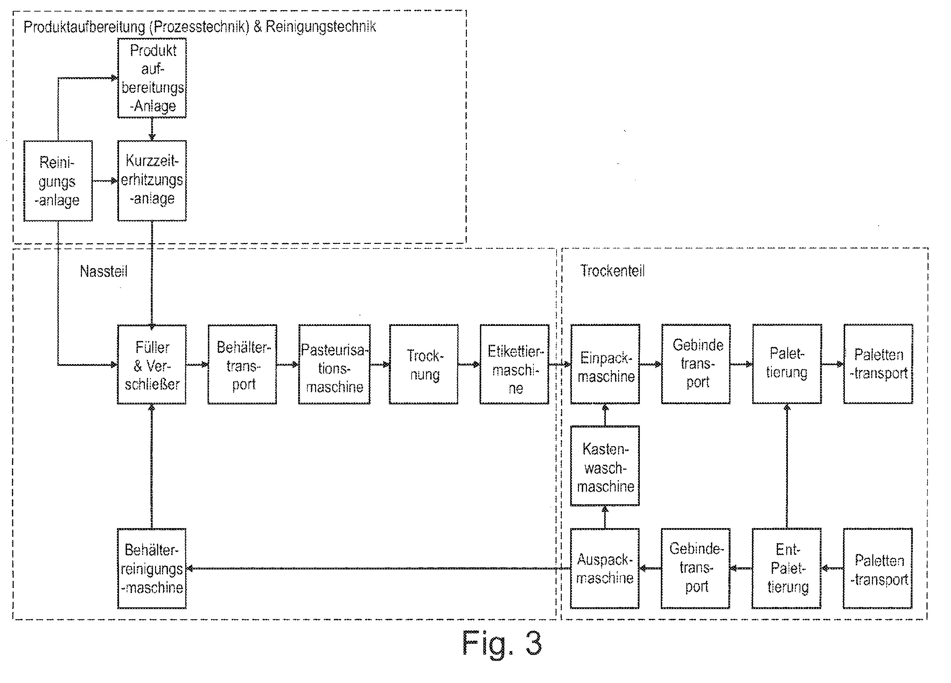

Das schematische Blockschaltbild der Fig. 3 illustiert schließlich eine beispielhafte Maschinenkonfiguration einer sog. Glas-Linie, bei der Glasbehälter mit Getränken befüllt werden. Hier entfallen einige Stationen der zuvor gezeigten PET-Einweg-Linie, da die regelmäßig und mehrfach wiederverwendbaren Glasbehälter zur Aufnahme der abzufüllenden Flüssigkeit vor ihrer Anlieferung an die Abfüllanlage bereits intensiv gereinigt wurden. Die hierzu notwendige Behälterreinigungsanlage ist grundsätzlich dem Nassteil der Anlage zuzuordnen. Der gesamte Prozess der Herstellung der Vorformlinge und der Formung der Behälter entfällt jedoch. Die gereinigten Behälter werden im Nassteil der Anlage mittels des Füllers und Verschließers mit dem Produkt bzw. dem Getränk befüllt, die aus der Produktaufbereitung (Prozesstechnik) und der Reinigungstechnik geliefert werden. Mit dem Nassteil sind die Stationen der Produktaufbereitung, d.h. der Prozesstechnik, und der Reinigungstechnik gekoppelt, was durch die Anordnung dieses Blocks oberhalb des Nassteilblocks angedeutet ist. Das abzufüllende Produkt, bspw. das abzufüllende Getränk, wird von der Produktaufbereitungsanlage über eine optionale Kurzzeiterhitzungsanlage zum Füller geliefert. Bei der Kaltabfüllung kann dieses kurzzeitige Erhitzen ggf. entfallen. Die Kurzzeiterhitzungsanlage kann auf vorteilhafte Weise die Abwärme der Energieerzeugungseinheit nutzen, bspw. über die Abgaswärmetauscher der Gasturbine o.ä. Beide erwähnten Anlagenteile der Produktaufbereitung sowie der Füller stehen zusätzlich mit einer Reinigungsanlage in Verbindung.

Nach dem Befüllen der Behälter und deren Verschließen werden sie über einen geeigneten Behältertransport einer Pasteurisationsmaschine und einer nachgeordneten Trocknung zugeführt, die bspw. ein Heißluftgebläse umfassen kann. Auch hierfür kann wiederum die Abwärme der Gasturbine genutzt werden. Normalerweise erfolgt nach der Trocknung die Etikettierung der Behälter, wozu entsprechend Fig. 2 eine Etikettiermaschine dient, die nach herkömmlichem Sprachgebrauch noch dem Nassteil der Anlage zuzurechnen ist. Es sind auch andere Arten der Behälteretikettierung möglich, bspw. ein Bedrucken eines Etiketts oder ein direktes Bedrucken der Behälter, was typischerweise in trockenem Zustand der Behälter erfolgt. Die elektrische und/oder pneumatische Energie, welche die Etikettiermaschine benötigt, kann vorzugsweise aus der von der Energieerzeugungseinheit mittels des elektrischen Generators gewonnenen elektrischen Energie zur Verfügung gestellt werden, ebenso wie damit ggf. weitere Anlagenteile gespeist werden können, bspw. die Transporteinrichtungen, die Füller, Verschließer etc. Auch die von der Pasteurisationsmaschine benötigte Wärmeenergie und elektrische und/oder pneumatische Energie kann auf vorteilhafte Weise von der Energieerzeugungseinheit (vgl. Fig. 1) zur Verfügung gestellt werden, wodurch nicht nur die Gesamtenergiekosten der gesamten Anlage deutlich reduziert werden können. Auch ist damit eine deutliche Reduktion der Emission von klimaschädlichem Kohlendioxid verbunden, wodurch die erfindungsgemäße Konfiguration einen wertvollen Beitrag zur Schonung der Energieressourcen sowie zum Schutz der Umwelt vor klimarelevanten Emissionen liefern kann.

Der dem Nassteil nachgeordnete Trockenteil der Anlage umfasst wiederum eine Verpackungsstation bzw. Einpackmaschine, die bspw. durch eine geeignete Station zur Herstellung von Gebinden gewünschter Konfiguration gebildet sein kann. Der anschließende Gebindetransport fördert die Gebinde zu einer Palettierstation, wonach der Palettentransport für die Einlagerung der Paletten in einem Lager oder deren Übergabe an Transporteinrichtungen wie Liefer-Lkw o. dgl. sorgen kann. Bei diesen erwähnten Stationen besteht weiteres Potenzial zur Nutzung der von der Anlage gelieferten elektrischen oder pneumatischen Energie.

Da es sich bei der in Fig. 3 gezeigten Anlage um eine Verarbeitungsanlage für Mehrwegbehälter handelt, umfasst der Trockenteil auch Abschnitte zur Verarbeitung und Handhabung von angeliefeilem Leergut. Dieses Leergut wird typischerweise mittels Paletten angeliefert und über einen Palettentransport einer Depalettierung zugeführt. Die hierbei frei werdenden Paletten oder Transportbehälter o. dgl. können unmittelbar der o.g. Palettierung für die frisch befüllten Behälter zur Verfügung gestellt werden, was durch den entsprechenden Pfeil angedeutet ist. Nach der Depalettierung erfolgt der Gebindetransport zur einer nachgeordneten Auspackmaschine, bei der eine Trennung der leeren Getränkeflaschen von den Getränkekästen erfolgt. Die Flaschen werden der bereits oben erwähnten Behälterreinigungsmaschine im Nassteil der Anlage'zugeführt, während die Kästen eine Kastenwaschmaschine durchlaufen, bevor sie der Einpackmaschine zur Verfügung gestellt werden, die für die Bestückung mit neu befüllten Getränkeflaschen sorgt.

Viele der erwähnten Station benötigen eine gewisse Wärmemenge, bspw. die Wasch- und Reinigungsstationen. Diese Wärme kann vorzugsweise aus der Abwärme der Gasturbine gewonnen werden. Daneben wird bei vielen der Stationen elektrische Energie zum Antrieb von Elektromotoren und anderen elektrischen Verbrauchern benötigt. Auch diese Energie kann in vorteilhafter Weise aus dem wenigstens einen Generator der Energieerzeugungseinheit gewonnen werden.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein. Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

Die dargestellten und oben erläuterten Figuren stellen nur mögliche Ausführungsbeispiele dar. Daraus lässt sich jedoch keinesfalls ableiten, dass eine Verwendung bei z.B. einer Mehrweg-Linie oder auch in der Prozesstechnik ausgeschlossen wäre. Auch bei solchen Anwendungen lassen sich die erfindungsgemäßen energetischen Verknüpfungen vorteilhaft einsetzen.

## Patentansprüche

1. Anlage zur Herstellung, Abfüllung, Verpackung und/oder Transport von Getränken in Getränkebehältern, bei der die Anlagenteile von mindestens einer gemeinsamen Energieerzeugungseinheit gespeist sind, die elektrische und/oder thermische Energie liefert, welche Energieerzeugungseinheit wenigstens eine Gasturbine umfasst, die mit einem elektrischen Generator und/oder mit einem Kompressor einer Druckluftanlage gekoppelt ist, wobei die Anlagenteile physisch und über eine gemeinsame Steuerung und zumindest teilweise energetisch miteinander gekoppelt sind, wobei die Anlagenteile jeweils miteinander gekoppelte Energiewandlungs-, -speicher- und/oder -verbrauchseinheiten bilden, und die mindestens eine gemeinsame Energieerzeugungseinheit alternativ oder zusätzlich mechanische Wellenenergie liefert, wobei die Gasturbine wenigstens einen Wärmetauscher, insbesondere einen Abgaswärmetauscher aufweist, der mit wenigstens einem Anlagenteil gekoppelt ist, und wobei die Energieerzeugungseinheit bzw. die Gasturbine zumindest einen Trockenteilblock der Behälterbehandlungsanlage und/oder der Getränkeabfüllanlage oder einen Teil davon energetisch versorgt.

2. Anlage nach Anspruch 1, bei der die Energieerzeugungseinheit bzw. die Gasturbine zumindest mit einer Heizstation der Behälterbehandlungsanlage, insbesondere mit einer Beheizungsstation für Vorformlinge und/oder mit einer Blasformstation und/oder mit einem Schrumpftunnel einer Verpackungsstation energetisch gekoppelt ist.

3. Anlage nach einem der Ansprüche 1 oder 2, bei der die Energieerzeugungseinheit bzw. die Gasturbine zumindest mit einer Druckluftversorgung wenigstens einer Verpackungsstation energetisch gekoppelt ist.

4. Anlage nach einem der Ansprüche 1 bis 3, bei der die Energieerzeugungseinheiten sowie die Energiewandlungs-, Energiespeicher- und/oder Energieverbrauchseinheiten mit einem lokalen, regionalen und/oder öffentlichen Leitungsnetz zur elektrischen Energieversorgung und/oder zur Wärmeenergieversorgung gekoppelt sind.

5. Verfahren zur Herstellung, Abfüllung, Verpackung und/oder Transport von Getränken in Getränkebehältern, bei dem die Anlagenteile von mindestens einer gemeinsamen Energieerzeugungseinheit gespeist werden, die elektrische und/oder thermische Energie liefert, wobei die Energieerzeugungseinheit wenigstens eine Gasturbine umfasst, die mechanisch einen elektrischen Generator und/oder einen Kompressor einer Druckluftanlage antreibt, wobei die von der Gasturbine gelieferte Abwärme wenigstens einem weiteren Anlagenteil zur Verfügung gestellt wird, wobei die Anlagenteile physisch und über eine gemeinsame Steuerung und zumindest teilweise energetisch miteinander gekoppelt sind, wobei die Anlagenteile jeweils miteinander gekoppelte Energiewandlungs-, -speicher- und/oder -verbrauchseinheiten bilden, und die mindestens eine gemeinsame Energieerzeugungseinheit alternativ oder zusätzlich mechanische Wellenenergie liefert, und wobei die Energieerzeugungseinheit bzw. die Gasturbine zumindest einen Trockenteilblock der Behälterbehandlungsanlage und/oder der Getränkeabfüllanlage oder einen Teil davon energetisch versorgt.

6. Verfahren nach Anspruch 5, bei der eine zu bestimmten Zeitpunkten benötigte und nicht von der Energieerzeugungseinheit zur Verfügung stellbare Mehrkapazität von einer mit den Anlagenteilen gekoppelten Speichereinheit geliefert wird, die eine Pufferkapazität zur Verfügung stellt.

7. Verfahren nach einem der Ansprüche 5 oder 6, bei der eine zu bestimmten Zeitpunkten benötigte und nicht von der Energieerzeugungseinheit zur Verfügung stellbare Mehrkapazität von einem mit den Anlagenteilen gekoppelten regionalen und/oder öffentlichen Leitungsnetz zur elektrischen Energieversorgung und/oder zur Wärmeenergieversorgung geliefert wird.

8. Verfahren nach einem der Ansprüche 5 bis 7, bei der eine zu bestimmten Zeitpunkten von der Energieerzeugungseinheit gelieferte und verfügbare und gleichzeitig nicht von den Verbrauchseinheiten benötigte und/oder nicht von der wenigstens einen Speichereinheit aufnehmbare elektrische Energie dem öffentlichen Leitungsnetz und/oder benachbarten Verbrauchseinheiten zur Verfügung gestellt wird.

9. Verfahren nach einem der Ansprüche 5 bis 8, bei der eine zu bestimmten Zeitpunkten von der Energieerzeugungseinheit gelieferte und verfügbare und gleichzeitig nicht von den Verbrauchseinheiten benötigte und/oder nicht von der wenigstens einen Speichereinheit aufnehmbare Wärmeenergie benachbarten Verbrauchseinheiten zur Verfügung gestellt wird.

## Claims

1. System for the production, filling, packaging and / or transport of beverages in beverage containers, whereby system components are supplied by means of at least one common energy generating device, which supplies electrical energy and / or thermal energy, whereby the generating device comprises at least one gas turbine, which is coupled to an electrical generator and / or to a compressor of a compressed air system, whereby the system components are coupled physically and by a common control unit and whereby the system components are coupled at least partially energetically, whereby the system components form mutually coupled energy conversion units, energy storage units and / or energy consumption units, and whereby the at least one common energy generating device alternatively or additionally provides mechanical wave energy, whereby the gas turbine comprises at least one heat exchanger, in particular an exhaust gas heat exchanger, whereby the at least one heat exchanger is coupled to at least one of the system components and whereby the energy generating device or the gas turbine provides energy to at least a dry end- block of the container processing system and / or beverage filling system or at least a part.

2. System according to claim 1, whereby the energy generating device or the gas turbine is energetically coupled to at least one heating unit of the container processing system, especially to a pre- heating unit for the preforms, and/ or to a blow molding device and / or to a shrinking tunnel of a packaging station.

3. System according to claim 1 or 2, whereby the energy generating device or the gas turbine is energetically coupled to at least one compressed air supply of at least one packaging station.

4. System according to one of the claims 1 to 3, whereby the energy generating devices as well as the energy conversion units, energy storage units and / or energy consumption units are coupled to a local, regional and / or public line network for electrical power supply and / or for thermal energy supply.

5. Method for the production, filling, packaging and / or transport of beverages in beverage containers, whereby system components are supplied by means of at least one common energy generating device, which supplies electrical energy and / or thermal energy, whereby the energy generating device comprises at least one gas turbine, which mechanically drives an electric generator and / or a compressor of a compressed air system, whereby the exhaust heat of the gas turbine is provided to at least one further component of the system, whereby the system components are coupled physically and by a common control unit and whereby the system components are coupled at least partially energetically, whereby the system components form mutually coupled energy conversion units, energy storage units and / or energy consumption units, and whereby the at least one common energy generating device alternatively or additionally provides mechanical wave energy and whereby the energy generating device or the gas turbine provides energy to at least a dry end- block of the container processing system and / or beverage filling system or at least a part.

6. Method according to claim 5, whereby an additional capacity, which is required at certain times and which cannot be provided by the energy generating device at the time, is supplied by a storage unit, the storage unit being coupled to the system components and providing a buffer capacity.

7. Method according to one of the claims 5 or 6, whereby an additional capacity, which is required at certain times and which cannot be provided by the energy generating device at the time, is supplied by a regional and / or public line network for electrical power supply and / or for thermal energy supply, the line network being coupled to the system components.

8. Method according to one of the claims 5 to 7, whereby electrical energy, which is generated by the energy generating device at certain times, but which is not required by the other consumption units of the systems at the time and / or which cannot be stored by the energy storage unit at the time, is fed to the public line network and / or is provided to other neighboring consumption units.

9. Method according to one of the claims 5 to 8, whereby thermal energy, which is generated by the energy generating device at certain times, but which is not required by the other consumption units of the systems at the time and / or which cannot be stored by the heat storage unit at the time, is provided to other neighboring consumption units.

## Revendications

1. Installation de production, d'embouteillage, de conditionnement et/ou de transport de boissons dans des récipients de boisson, dans laquelle les parties de l'installation sont alimentées par au moins une unité commune de production d'énergie qui fournit de l'énergie électrique et/ou thermique, ladite unité de production d'énergie comprenant au moins une turbine à gaz qui est couplée à un générateur électrique et/ou à un compresseur d'une installation à air comprimé, les parties de l'installation étant couplées les unes aux autres physiquement et via une commande commune et au moins en partie énergétiquement, les parties de l'installation formant des unités de transformation d'énergie, de stockage d'énergie et/ou de consommation d'énergie couplées respectivement entre elles, et ladite au moins une unité commune de production d'énergie fournissant alternativement ou en sus de l'énergie d'arbre mécanique, ladite turbine à gaz présentant au moins un échangeur de chaleur, en particulier un échangeur de chaleur des gaz brûlés qui est couplé à au moins une partie de l'installation, et ladite unité de production d'énergie ou bien ladite turbine à gaz alimentant de façon énergétique au moins un bloc de partie sèche de l'installation de traitement de récipients et/ou de l'installation d'embouteillage de boissons ou une partie de celui-ci.

2. Installation selon la revendication 1, dans laquelle ladite unité de production d'énergie ou bien ladite turbine à gaz est couplée énergétiquement au moins à un poste à chauffer de l'installation de traitement de récipients, en particulier à un poste de chauffage pour préformes et/ou à un poste de moulage par soufflage et/ou à un tunnel de rétrécissement d'un poste d'emballage.

3. Installation selon l'une quelconque des revendications 1 ou 2, dans laquelle ladite unité de production d'énergie ou bien ladite turbine à gaz est couplée énergétiquement au moins à une alimentation en air comprimé d'au moins un poste d'emballage.

4. Installation selon l'une quelconque des revendications 1 à 3, dans laquelle les unités de production d'énergie ainsi que les unités de transformation d'énergie, de stockage d'énergie et/ou de consommation d'énergie sont couplées à un réseau de distribution local, régional et/ou public pour l'alimentation en énergie électrique et/ou pour l'alimentation en énergie thermique.

5. Procédé de production, d'embouteillage, de conditionnement et/ou de transport de boissons dans des récipients de boisson, dans lequel les parties de l'installation sont alimentées par au moins une unité commune de production d'énergie qui fournit de l'énergie électrique et/ou thermique, ladite unité de production d'énergie comprenant au moins une turbine à gaz qui entraîne mécaniquement un générateur électrique et/ou un compresseur d'une installation à air comprimé, la chaleur perdue fournie par ladite turbine à gaz étant mise à la disposition à au moins une autre partie de l'installation, les parties de l'installation étant couplées les unes aux autres physiquement et via une commande commune et au moins en partie énergétiquement, les parties de l'installation formant des unités de transformation d'énergie, de stockage d'énergie et/ou de consommation d'énergie couplées respectivement entre elles, et ladite au moins une unité commune de production d'énergie fournissant alternativement ou en sus de l'énergie d'arbre mécanique, et ladite unité de production d'énergie ou bien ladite turbine à gaz alimentant de façon énergétique au moins un bloc de partie sèche de l'installation de traitement de récipients et/ou de l'installation d'embouteillage de boissons ou une partie de celui-ci.

6. Procédé selon la revendication 5, dans lequel un surcroît de capacité qui est requis à certains moments et ne peut pas être mis à la disposition par ladite unité de production d'énergie est fourni par une unité de stockage qui est couplée aux parties de l'installation et qui met à la disposition une capacité tampon.

7. Procédé selon l'une quelconque des revendications 5 ou 6, dans lequel un surcroît de capacité qui est requis à certains moments et ne peut pas être mis à la disposition par ladite unité de production d'énergie est fourni par un réseau de distribution régional et/ou public pour l'alimentation en énergie électrique et/ou pour l'alimentation en énergie thermique qui est couplé aux parties de l'installation.

8. Procédé selon l'une quelconque des revendications 5 à 7, dans lequel une énergie électrique qui est fournie à certains moments par ladite unité de production d'énergie et est disponible et, en même temps, n'est pas nécessitée par les unités de consommation et/ou ne peut pas être reçue par ladite au moins une unité de stockage est mise à la disposition du réseau de distribution public et/ou d'unités de consommation voisines.

9. Procédé selon l'une quelconque des revendications 5 à 8, dans lequel une énergie thermique qui est fournie à certains moments par ladite unité de production d'énergie et est disponible et, en même temps, n'est pas nécessitée par les unités de consommation et/ou ne peut pas être reçue par ladite au moins une unité de stockage est mise à la disposition d'unités de consommation voisines.
